(19) Europäisches Patentamt
European Patent Office
Office européen des brevets

(11) **EP 2 742 645 B1**

(12) **FASCICULE DE BREVET EUROPEEN**

(45) Date de publication et mention
de la délivrance du brevet:
**03.10.2018 Bulletin 2018/40**

(21) Numéro de dépôt: **12743968.5**

(22) Date de dépôt: **02.08.2012**

(51) Int Cl.:
**H04L 9/08** (2006.01)  **H04L 9/32** (2006.01)

(86) Numéro de dépôt international:
**PCT/EP2012/065153**

(87) Numéro de publication internationale:
**WO 2013/020890 (14.02.2013 Gazette 2013/07)**

(54) **PROCÉDÉ DE GESTION ET DE CONTRÔLE DE DONNÉES DE DIFFÉRENTS DOMAINES D'IDENTITÉ ORGANISÉS EN ENSEMBLE STRUCTURE**

VERFAHREN ZUR VERWALTUNG UND PRÜFUNG VON IN EINEM STRUKTURIERTEN SATZ ORGANISIERTEN DATEN AUS UNTERSCHIEDLICHEN IDENTITÄTSDOMÄNEN

METHOD FOR MANAGING AND CHECKING DATA FROM DIFFERENT IDENTITY DOMAINS ORGANIZED INTO A STRUCTURED SET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.08.2011 FR 1157261**

(43) Date de publication de la demande:
**18.06.2014 Bulletin 2014/25**

(73) Titulaire: **Idemia Identity & Security France**
**92130 Issy-les-Moulineaux (FR)**

(72) Inventeurs:
• **PATEY, Alain**
**92130 Issy-les-Moulineaux (FR)**
• **CHABANNE, Hervé**
**92130 Issy-les-Moulineaux (FR)**
• **BRINGER, Julien**
**92130 Issy-les-Moulineaux (FR)**

(74) Mandataire: **Regimbeau**
**20, rue de Chazelles**
**75847 Paris Cedex 17 (FR)**

(56) Documents cités:
**EP-A2- 1 164 745    WO-A2-2009/028794**
**FR-A1- 2 925 732    US-A1- 2010 122 080**

• **Julien Bringer ET AL: "Backward unlinkability for a VLR group signature scheme with efficient revocation check", Cryptology ePrint Archive, 12 juillet 2011 (2011-07-12), XP055024181, Extrait de l'Internet: URL:http://eprint.iacr.org/2011/376 [extrait le 2012-04-11] cité dans la demande**

**Description**

DOMAINE DE L'INVENTION

La présente invention concerne de manière générale l'authentification d'individus, et plus particulièrement les situations dans lesquelles un individu doit s'authentifier sans pour autant divulguer ses données d'identité principales.

L'invention s'applique notamment dans des situations où un individu possède plusieurs « identités » chacune se rapportant à un groupe d'appartenance différent.

Par « identité », on entend ici et dans tout le présent texte une ou plusieurs données d'identification propres à l'individu. Les données d'identification de chaque identité sont fonction du groupe auquel se rapporte cette identité.

Un même individu peut ainsi posséder plusieurs identités de différents niveaux, c'est-à-dire des identités plus ou moins fortes, dans le sens où il faut déjà posséder une identité d'un niveau donné pour pouvoir acquérir une autre identité d'un groupe d'appartenance d'un niveau qui dépend du niveau précédent. Par exemple, il faut disposer de documents d'identité nationale pour acquérir un compte bancaire ou une carte de sécurité sociale.

ETAT DE LA TECHNIQUE

Comme on vient de le voir, l'inscription d'un individu à un groupe afin d'obtenir une identité au sein de ce groupe, est souvent conditionnée à la détention d'une autre identité, plus forte. Par exemple, dans le cas de l'inscription à un service internet, la possession d'une adresse e-mail est souvent un pré-requis.

Toutefois, ceci peut s'avérer problématique, en particulier lorsque la fourniture d'informations relatives à l'identité forte permet à un membre ou un gestionnaire du nouveau groupe d'avoir accès à des données d'identité privées que l'individu ne souhaitait pas communiquer.

A titre d'exemple, de plus en plus d'individus sont exposés, par l'utilisation de sites Internet, à ce que des données privées (adresse internet ou autres données personnelles) soient transmises de façon incontrôlée d'une part au gestionnaire, puis par le gestionnaire le cas échéant à d'autres acteurs.

Il existe donc un besoin pour identifier un individu afin de permettre son adhésion à un nouveau groupe, sans que les données d'identité utilisées pour cette identification ne permettent de remonter à des données principales d'identité que l'individu ne souhaiterait pas communiquer.

Il a été proposé dans le document EP 1 164 745 un procédé de gestion d'un groupe, décrivant la création et l'attribution d'une signature de groupe à un individu, et l'identification de l'individu au moyen de cette signature.

Cependant, dans ce document, l'adhésion à un groupe par un individu implique nécessairement la communication des données principales d'identité de l'individu, par exemple son nom. Ce document ne décrit pas non plus comment identifier un individu sans utiliser de données principales d'identité.

Il a également été proposé dans le document FR 2 925 732 une méthode d'authentification biométrique permettant à un individu de s'authentifier de manière anonyme, aux moyens combinés de données biométriques et cryptographiques.

Les documents WO2009/028794 et US2010/0122080 décrivent des procédés de dérivation d'une identité dérivée à partir d'une identité parente telle que le nom de famille, sans qu'un serveur de gestion de l'identité dérivée n'accède à des données d'identité de l'identité parente.

Ce procédé peut être combiné avec l'utilisation de signatures de groupes, telles que par exemple les schémas de signatures de groupe décrits dans

- D. Boneh and H. Shacham ; "Group signatures with verifier-local revocation", IN V.Atluri, B. Pzistmann, and P.D. McDaniel, editors, ACM Conference on Computer and Communications Security, pages 168 - 177, ACM, 2004, et/ou dans
- L. Chen and J. Li. "VLR group signatures with indisputable exculpability and efficient revocation" ; in A. K. Elmagarmid and D. Agrawal, editors, Social-Com/PASSAT, pages 727-734 , IEEE Computer Society, 2010,
- J. Bringer and A. Patey, « Backward unlinkability for a VLR group signature scheme with efficient revocation check. Cryptology ePrint Archive - Report 2011/376

Ces schémas de signatures de groupes permettent à un individu de s'authentifier en prouvant qu'il appartient à un groupe donné, tout en restant anonyme.

Cette méthode permet donc de créer une identité à partir d'informations biométriques propres à un individu, et d'authentifier l'individu tout en conservant son anonymat.

PRESENTATION DE L'INVENTION

L'invention propose quant à elle un procédé permettant d'utiliser une identité préexistante pour générer une identité dite « dérivée », l'identité dérivée étant liée à l'identité parente, le lien entre ces deux identités étant néanmoins masqué, de telle sorte qu'il est impossible de remonter ce lien à partir des authentifications de l'une et de l'autre de ces identités, ce lien pouvant néanmoins être exploitable pour, par exemple, pouvoir révoquer l'identité « dérivée » d'un individu lorsque l'identité parente de cet individu est elle-même révoquée.

Notamment, elle propose un procédé de gestion et de contrôle de différentes données d'identité d'un individu, ces données correspondant à plusieurs domaines d'identités organisés en ensemble structuré, dans lequel au moins un système de contrôle est apte à mettre en oeuvre pour un domaine d'identité donné une authentification de l'individu à partir des données d'identité associées à ce domaine pour l'individu.

Pour générer des données d'identité d'un domaine d'identité dérivée pour lequel il est nécessaire de disposer de données d'identité pour un ou des domaines parents, on met en oeuvre pour chaque domaine d'identité parent, à partir des données d'identité de l'individu pour le domaine parent, un traitement d'authentification de l'individu auprès d'un serveur de gestion du domaine d'identité dérivée au cours duquel,

- on transmet au serveur de gestion du domaine d'identité dérivée des informations fonction des données d'identité du domaine parent et au moins une information de preuve de validité de ces données,
- le serveur de gestion d'identité dérivée authentifie l'individu pour le domaine parent et contrôle, au moyen de l'information de preuve, la validité des informations transmises.

En fonction des résultats d'authentification et de contrôle,

- le serveur de gestion d'identité dérivée génère pour l'individu, en fonction des informations transmises, au moins une partie de données d'identité avec lesquelles l'individu peut s'authentifier auprès d'un fournisseur de service pour le domaine d'identité dérivée,
- ledit serveur de gestion d'identité dérivée mémorisant des informations de dérivation comportant tout ou partie des informations échangées au cours du traitement d'authentification pour ultérieurement, le cas échéant, en fonction d'informations de lien transmises par un domaine parent, faire le lien entre des données d'identité du domaine d'identité dérivée et des données d'identité du domaine parent, le traitement de génération par les différents serveurs d'identité étant tel qu'aucun lien ne peut être établi à partir de deux authentifications dans deux domaines distincts en l'absence de ces informations de lien.

Un tel procédé permet donc à un individu de dériver une identité, c'est-à-dire de générer une identité à partir d'une seconde identité, plus forte, sans lever l'anonymat sur l'individu.

En outre il rend impossible la fraude durant l'authentification d'un individu, malgré le lien entre deux identités de deux niveaux distincts d'un même individu.

Dans un mode de mise en oeuvre, pour l'authentification d'un individu auprès d'un fournisseur de service pour un domaine d'identité, on transmet à ce fournisseur de service des informations déterminées en fonction des données d'identité du domaine, le traitement mis en oeuvre pour cette détermination rendant l'information ainsi transmise anonyme pour toute entité à l'exception du serveur de gestion du domaine et de l'individu qui s'authentifie.

Par ailleurs, les données d'identité d'un individu peuvent comporter des données biométriques de l'individu et/ou des données obtenues par traitement de données biométriques.

Egalement, dans des mises en oeuvre, le procédé proposé permet aussi des révocations. De cette façon, lorsqu'un individu est révoqué pour une identité, il ne peut plus s'authentifier avec cette identité. Le procédé permet notamment des révocations en cascade, c'est-à-dire qu'il est possible de révoquer un individu d'un certain niveau (domaine) d'identité s'il a été révoqué d'un niveau (domaine) d'identité supérieur (par exemple lui retirer une assurance de voiture s'il a perdu son permis de conduire).

Ainsi, il peut être prévu pour chaque serveur de gestion de domaine d'identité un traitement de révocation d'individu, par lequel il publie une information de révocation utilisée par les fournisseurs de service pour empêcher un individu révoqué d'un domaine de s'authentifier en utilisant les données d'identité associées à ce domaine.

La génération de données d'identité dérivée à partir des données d'identité associées à ce domaine pour l'individu est alors ainsi rendu impossible.

Par exemple, lors d'un traitement de révocation par un serveur de domaine parent, ce serveur transmet à chaque serveur de gestion d'identité dérivée des informations de lien associées à un individu révoqué, ces informations étant traitées par ledit serveur, afin de mettre en oeuvre le traitement de révocation de l'individu, si ce dernier possède des données d'identité pour ce domaine d'identité dérivée.

Optionnellement dans certains cas, il est également possible de révoquer un individu d'un domaine s'il a été révoqué d'un domaine d'identité dérivée.

Notamment, lors d'un traitement de révocation par un serveur de domaine dérivé, ce serveur transmet à un serveur de gestion d'identité parent choisi des informations de dérivation associées à un individu révoqué, ces informations étant le cas échéant traitées par ledit serveur, afin de mettre en oeuvre le traitement de révocation de l'individu pour ce domaine parent.

L'invention propose en outre un système de gestion et de contrôle mettant en oeuvre le procédé proposé.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- la figure 1 représente un exemple d'ensemble d'identités partiellement ordonnées pour lequel un procédé de dérivation conforme à l'invention peut être mis en oeuvre.

- La figure 2 illustre schématiquement un exemple de mise en oeuvre de gestion d'une identité.
- Les figures 3a et 3b présentent respectivement un exemple de procédé d'acquisition d'une identité et un exemple d'authentification.
- La figure 4 illustre schématiquement un exemple de dérivation d'identités conforme à un mode de mise en oeuvre possible pour l'invention.
- La figure 5 illustre schématiquement les différentes étapes de la dérivation illustrée sur la figure 4.

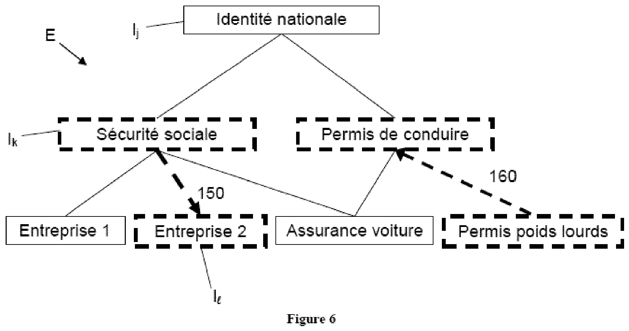

- La figure 6 illustre un exemple de mise en oeuvre de révocation en cascade.

## DESCRIPTION DETAILLEE D'AU MOINS UN EXEMPLE DE MISE EN OEUVRE

### Contexte et formalisme

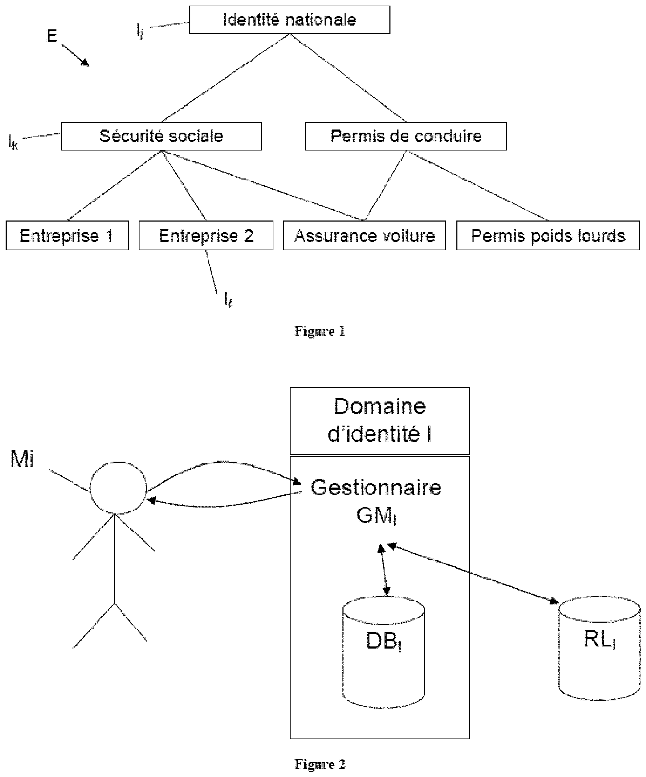

En référence à la figure 1, on a illustré un ensemble E ordonné de domaines d'identités.

Dans cet exemple, l'identité nationale $I_j$ correspond au domaine de niveau le plus élevé. Elle est nécessaire pour s'inscrire auprès de la sécurité sociale (domaine d'identité $I_k$) et obtenir un permis de conduire. Lorsque l'inscription à la sécurité sociale ou l'obtention du permis de conduire est validée, des données secrètes d'identité sont communiquées à l'individu, par exemple en étant stockées sur une mémoire de type carte à puce.

Les données d'identité communiquées lors de l'inscription à la sécurité sociale peuvent être nécessaires à un employeur pour embaucher des salariés et leur attribuer des accréditations pour le domaine de l'entreprise $I_\ell$.

Cet ensemble est organisé de façon partiellement ordonnée, les relations suivantes s'y appliquant :

- réflexivité : $\forall x \in E, x \leq x,$
- transitivité : $\forall x, y, z \in E, (x \leq y \wedge y \leq z) \Rightarrow (x \leq z)$
- antisymétrie : $\forall x, y \in E, (x \leq y \wedge y \leq x) \Rightarrow (x = y)$

où $x \leq y$ signifie que le domaine d'identité x est en dessous du domaine de l'identité y.

Dans toute la suite, on dira qu'un domaine d'identité x de l'ensemble E partiellement ordonné est parent d'un autre domaine y si $y \leq x$ et $\forall z \in E, (z \leq x \wedge y \leq z) \Rightarrow (x = z \vee y = z)$.

Par exemple, de retour à la figure 1, le domaine d'identité « permis de conduire » est parent du domaine « assurance voiture » ; l'identité nationale est quant à elle parente de l'identité « sécurité sociale ».

Sur la figure, les connecteurs représentés entre deux domaines distincts indiquent quelle(s) identité(s) doit posséder l'individu $M_i$ pour pouvoir acquérir une identité du domaine juste en-dessous. Dans l'exemple, pour obtenir une identité du domaine $I_\ell$ « assurance voiture », l'individu $M_i$ doit posséder une identité de sécurité sociale et un permis de conduire.

La mise en oeuvre décrite dans ce qui suit utilise, à titre d'exemple, la signature de groupe telle que proposée dans l'article de Bringer et Patey déjà cité. On pourra avantageusement se référer à cet article, l'exemple de mise en oeuvre détaillé ci-dessous en reprenant les notations.

Dans le protocole proposé dans cet article, pour chaque groupe :

- le gestionnaire GM possède une clé secrète msk,
- chaque individu $M_i$ membre du groupe possède une clé secrète $sk_i = (f_i, x_i, A_i)$ où l'élément $f_i$ est choisi par $M_i$ et les éléments $x_i$ et $A_i$ fournis par le gestionnaire,
- pour chaque individu, il existe un jeton de révocation $rt_i$ dérivé de $sk_i$ stocké par le gestionnaire dans une base de données DB ; dans l'exemple qui suit, on a $rt_i = x_i$ ;
- le gestionnaire publie une liste de révocation RL où sont affichés les jetons de révocations des utilisateurs révoqués du groupe.

Ce protocole utilise particulièrement deux algorithmes :

- « *Sign* » qui permet à un membre du group de signer un message à l'aide de sa clé secrète $sk_i$,
- « *Verify* » qui permet à toute personne, munie uniquement de la liste de révocation, de vérifier la validité d'une signature, ce qui atteste de l'appartenance du signataire au groupe,

### Exemple de mise en oeuvre

En l'occurrence, dans l'exemple qui suit et en référence à la figure 2, chaque domaine d'identité I est géré par un gestionnaire d'identités correspondant $GM_I$ qui est l'autorité pouvant délivrer une identité à l'individu $M_i$ et qui est un gestionnaire de groupe au sens de l'article précité

Ce gestionnaire $GM_I$ peut prendre la forme d'un programme informatique mis en oeuvre au niveau d'un serveur de gestion d'identité associé à des capacités de stockage et notamment à une base de données $DB_I$ qui stocke les données d'enrôlement des individus possédant une identité dans ce domaine, ainsi que des jetons de révocation propres à chaque individu. Ce programme gère les enrôlements et révocations de la façon qui est décrite ci-après. Il ne participe pas aux authentifications, qui sont gérées par des programmes propres aux fournisseurs de service requérant la possession d'une identité de ce domaine.

### Enrôlement

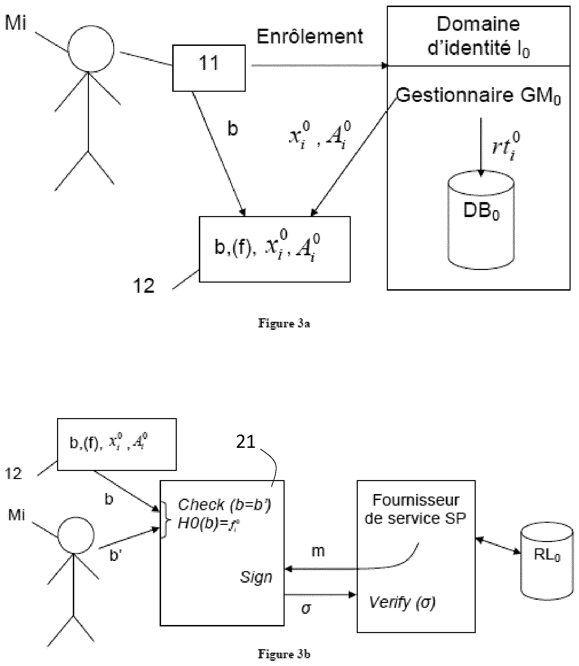

Pour acquérir la première identité $I_0$, à savoir ici l'identité nationale $I_j$, l'individu $M_i$ peut mettre en oeuvre, ainsi qu'illustré sur la figure 3a, un procédé d'enrôlement similaire à celui décrit dans le document FR 2 925 732. En particulier, il peut par exemple faire l'acquisition au moyen d'un capteur 11 d'un trait biométrique b, qui est ensuite stocké dans une carte personnelle 12 telle qu'une carte à puce, ou une clé USB. Il peut également faire l'objet d'une impression papier.

Un tel trait biométrique b peut être tout type de trait biométrique couramment utilisé, comme des données biométriques relatives à l'iris, au visage, à une empreinte digitale, etc.

Dans le cas d'une telle procédure d'enrôlement, le trait biométrique est d'autre part protégé, au moyen d'une fonction cryptographique, par l'individu $M_i$, la fonction cryptographique étant par exemple une fonction de hachage *Hash.*

Le trait biométrique est également stocké sur la carte 12 sous cette forme protégée $f_i^0 = Hash(b)$., qui constitue le premier élément d'une clé de signature de groupe $sk_i^0$.

Dans ce cas, la carte personnelle 12 de l'individu $M_i$ peut également mémoriser les deux autres éléments d'une clé de signature de groupe :

- $x_i^0$, choisi aléatoirement par le gestionnaire dans le cas de la première identité, et généré de la façon décrite ci-dessous dans le cas d'identités dérivées ;

- $A_i^0$, générés par le gestionnaire $GM_0$ à partir d'un paramètre secret msk de groupe, de l'élément $x_i^0$ et de la donnée biométrique protégée $f_i^0$. La génération de cet élément est décrite plus en détails dans les articles relatifs aux signatures de groupe mentionnés ci-avant.

La clé secrète totale permettant d'authentifier l'individu $M_i$ est alors une clé de signature de groupe $sk_i^0 = (x_i^0, f_i^0, A_i^0)$. Dans cet exemple, la clé de signature est obtenue au moyen d'éléments biométriques. D'autres mises en oeuvre sont possibles, par exemple en choisissant $f_i^0$ aléatoirement.

La carte personnelle 12 de l'individu $M_i$ peut donc contenir les données b, $x_i^0$ et $A_i^0$, ainsi qu'éventuellement la partie protégée $f_i^0$ de la donnée biométrique.

*Authentification*

Le procédé d'authentification est illustré schématiquement en figure 3b. Pour procéder à l'authentification de l'individu $M_i$ auprès d'un fournisseur de service SP, un dispositif de contrôle 21 procède à l'acquisition d'un trait biométrique b' de l'individu, lit le trait biométrique b stocké sur la carte, et compare les deux traits biométriques.

Pour ce faire, le dispositif de contrôle 21 est par exemple un dispositif muni d'un capteur de données biométriques et d'un lecteur du dispositif de stockage personnel 12 (par exemple lecteur de carte à puces), qui ne sont pas représentés sur la figure.

Alternativement, le dispositif 21 ne comprend qu'un lecteur du dispositif de stockage personnel 12, l'acquisition et la comparaison ayant lieu dans le dispositif de stockage personnel 12.

Si les deux traits b et b' correspondent, le dispositif de contrôle 21 (ou le dispositif de stockage 12) applique au trait biométrique b la fonction de hachage *Hash* qu'il détient, pour obtenir la donnée $f_i^0$.

Alternativement, si la donnée $f_i^0$ est stockée dans la carte personnelle 12, le lecteur peut procéder à l'acquisition de celle-ci.

Enfin, si ce procédé d'authentification prévoit l'utilisation des signatures de groupes, le fournisseur de services SP peut envoyer un message m au dispositif de contrôle 21, qui répond en transmettant une signature sur ce message. Cette signature peut être générée par le dispositif de contrôle que constitue le lecteur 21 ou par la carte 12, en utilisant l'algorithme *Sign,* avec la clé secrète stockée dans la carte de l'individu $M_i$. Enfin un algorithme de vérification *Verify,* ayant pour entrée la signature du message et la liste de révocation du domaine associé est mis en oeuvre par le fournisseur de service pour vérifier que la signature est valide. La validité de cette vérification assure que l'individu associé n'est pas révoqué du domaine de l'identité concernée.

Ce principe d'authentification est également décrit dans FR 2 925 732. Il repose sur les algorithmes de signature de groupe (dont *Sign* et *Verify*) décrits dans les articles cités en introduction du présent texte.

La signature transmise au serveur du fournisseur de service est telle que l'information ainsi transmise est anonyme pour toute entité à l'exception de l'individu qui s'authentifie et du serveur de gestion du domaine (groupe) auquel appartient l'individu.

*Dérivation à partir d'identités de référence*

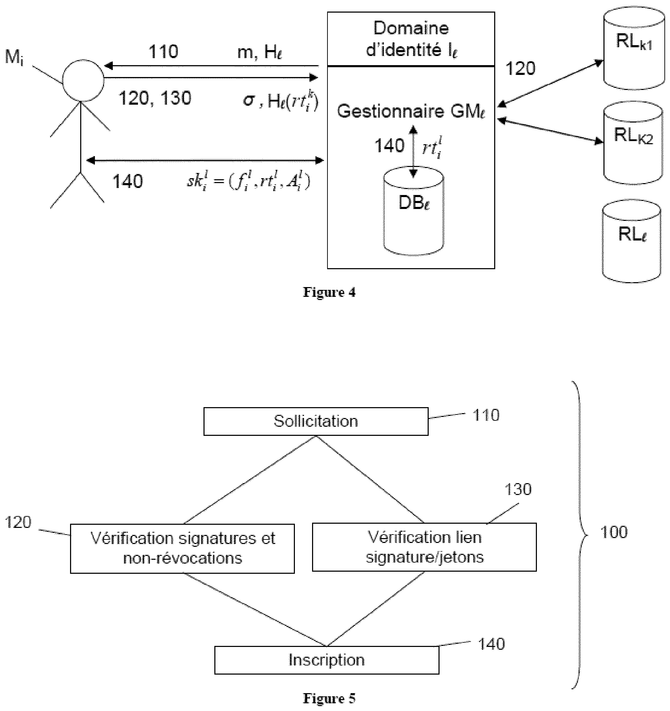

On décrit ci-après le procédé de dérivations d'identités en référence aux figures 4 et 5.

Dans la suite, on considère l'exemple d'un individu $M_i$, détenant une identité nationale $I_0$, ainsi que l'ensemble des identités $I_k$ nécessaire à l'obtention d'une identité $I_\ell$, et souhaitant obtenir l'identité $I_\ell$, par exemple « assurance voiture ». On a représenté à titre d'exemple en figure 4 deux identités $I_{k1}$ et $I_{k2}$, chacune étant gérée par un serveur ou gestionnaire de groupe respectif $GM_{k1}$ et $GM_{k2}$.

Lorsqu'un individu Mi souhaite acquérir une

identité $I_\ell$, il déclenche un procédé d'enrôlement 100.

Au cours d'une étape 110, le gestionnaire de groupe $GM_\ell$ envoie un message m de sollicitation à l'individu $M_i$, ainsi qu'une fonction de dérivation $H_\ell$ propre à l'identité $I_\ell$. Cette fonction peut être publique.

En réponse à cette sollicitation, l'individu signe le message m de sollicitation au moyen de sa clé de signature secrète $sk_i^k$, qui est possiblement une clé de signature de groupe et ce pour toutes les domaines d'identité k nécessaires à l'obtention de données d"identité dans le domaine $I_\ell$.

Cette étape reprend la phase d'authentification décrite précédemment avec, comme fournisseur de service requérant les identités du domaine $I_k$, le serveur de gestion du gestionnaire du domaine $I_\ell$.

Au cours de cette étape, l'individu envoie, outre une signature de groupe pour chaque identité $I_{k,,}$ ses jetons dits de dérivation $H_\ell(rt_i^k)$, calculés à partir de chacun des jetons de révocation $rt_i^k$ associés aux $I_k$ (que l'individu retrouve à partir de sa clé secrète) et de la fonction de dérivation $H_\ell$ associée à $I_\ell$.

De même que dans le cas de l'authentification, les calculs et échanges sont effectués par le dispositif de contrôle 21 et/ou la carte 12.

L'utilisation de la fonction de dérivation $H_\ell$ garantit la confidentialité des jetons de révocation $rt_i^k$.

De préférence, cette fonction $H_\ell$ est une fonction dite à sens unique. Cela signifie qu'il n'est pas possible de retrouver l'antécédent d'un signal codé par la fonction, et donc de garantir que le jeton de révocation $rt_i^k$ ne soit connu que de l'individu $M_i$ et du gestionnaire d'identités $GM_k$. Elle peut, par exemple, être définie par $Hl(x) = h_l^x$ où $h_\ell$ est un générateur d'un groupe, au sens algébrique du terme, dans lequel le Problème du Logarithme Discret est difficile.

*Preuve de la validité du jeton de dérivation*

La signature est en outre construite de sorte à s'assurer de la légitimité des jetons de dérivation, notamment en s'assurant de la possibilité de retrouver le lien entre les jetons dits de dérivation $H_\ell(rt_i^k)$ et les jetons de révocation $rt_i^k$, ce qui permet la bonne mise en oeuvre du procédé de révocation en cascade décrit par la suite.

Cela peut par exemple être réalisé avec le schéma de Bringer et Patey qui permet une signature de groupe VLR (Verifier-Local Revocation) possédant la propriété dite de rétro-intraçabilité ou « Backward-Unlinkability » (selon la terminologie anglo-saxonne couramment utilisée par l'homme du métier).

Cette propriété, dans son contexte d'utilisation habituel, implique que les authentifications soient liées à des périodes temporelles. Ainsi, un individu peut être révoqué à certaines périodes, mais pas aux autres, tout en utilisant toujours les mêmes clés de signature.

Dans ce cas particulier, les jetons de révocation de chaque période sont analogues aux jetons de dérivation susmentionnés, c'est-à-dire qu'il existe une fonction à sens unique $H_\ell$ pour chaque période $\ell$ et que le jeton de révocation d'un individu $M_i$ pour la période $\ell$ est égal à $H_\ell(rt_i)$ où $rt_i$ est son jeton de révocation global. La connaissance d'un jeton de révocation périodique ne permet pas la connaissance du jeton de révocation global. Il est également impossible de savoir si deux jetons périodiques pour deux périodes différentes proviennent du même jeton de révocation global, sans la connaissance de ce dernier.

L'utilisation d'une signature de groupe avec « backward-unlinkalibilty » permet de vérifier facilement que le jeton de dérivation est bien associé au signataire.

Ainsi, lors du traitement de génération d'une nouvelle identité, l'individu va signer avec sa clé $sk_i^l$ pour une période $\ell$ fictive associée à la fonction $H_\ell$. Le jeton de dérivation $H_\ell(rt_i)$ est alors le jeton de révocation périodique pour la période fictive I.

Les authentifications mises en oeuvre dans les autres cas, et notamment les authentifications auprès de fournisseurs de service autres que le gestionnaire d'identité, n'exploitent quant à elles pas cette propriété.

*Vérification de la validité du jeton de dérivation*

Pour vérifier la validité du jeton de dérivation $H_\ell(rt_i^k)$, le gestionnaire du domaine $I_\ell$ utilise donc le test de révocation associé à la période fictive $\ell$ avec la signature $\sigma$ et le jeton de dérivation $H_\ell$. Dans l'exemple de la signature de Bringer et Patey, et en suivant les notations de l'article associé, il récupère les éléments B et L de $\sigma$ et vérifie si $L = B^{H_l(rt_i^k)}$.

Si c'est bien le cas pour chacun des domaines parents $I_k$, le gestionnaire peut passer à l'étape suivante d'inscription.

*Autres étapes*

Les signatures de groupe ainsi générées permettent au gestionnaire d'identité $GM_l$ de lancer l'étape 120 de vérification que l'individu $M_i$ possède bien l'ensemble des identités $I_k$ et que le jeton de dérivation $H_\ell(rt_i^k)$ envoyé est bien lié à la signature reçue.

Pour ce faire, le gestionnaire d'identité $GM_\ell$ met en oeuvre l'algorithme *Verify* cité précédemment augmenté d'une phase de vérification du lien entre la signature et le jeton de dérivation reçus pour chacune des identités $I_k$. Cela peut par exemple être réalisé avec l'algorithme Verify du schéma de Bringer et Patey.

Le gestionnaire d'identités $GM_\ell$ vérifie également que l'individu $M_i$ n'a été révoqué d'aucune identité $I_k$ au cours d'une étape 130 utilisant en partie l'algorithme Verify et les listes publiques de révocation $RL_k$. Alternativement, cette vérification peut être entièrement incluse dans l'étape 120.

Si les deux conditions des étapes 120 et 130 sont vérifiées, le gestionnaire d'identité $GM_\ell$ peut créer une données du domaine d'identité dérivée $I_\ell$ pour l'individu $M_i$ au cours d'une étape 140 d'inscription.

Cette étape est analogue au procédé décrit précédemment en référence à la figure 3a, à la différence que le gestionnaire d'identité ne choisit pas aléatoirement l'élément $x_i^l$ pour le niveau $\ell$ mais le dérive à partir des jetons de dérivation $\mathsf{H}_\ell(rt_i^k)$ associés aux domaines $I_k$ et $I_\ell$, reçus lors de l'étape 110.

Par exemple, il peut être obtenu ainsi :

$$: x_i^l = Hash(msk_l \| (x_i'^k)_{k \in K}),$$

où $msk_\ell$ est la clé secrète du gestionnaire d'identité $GM_\ell$ et $x_i'^k = \mathsf{H}_\ell(rt_i^k)$.

Cet élément $x_i^l$ est en fait la deuxième partie de la clé secrète de l'individu $M_i$ pour le niveau $\ell : sk_i^l = (f, x_i^l, A_i^l,)$, et à ce titre il est stocké dans une carte d'identification 12 générée pour l'individu $M_i$. Il est également stocké dans la base de données $DB_\ell$ de l'identité $\ell$ en plus de l'ensemble des jetons de dérivation $\mathsf{H}_\ell(rt_i^k)$.

La première partie de la clé secrète $sk_i^l$ est dérivée d'une acquisition d'un trait biométrique B de l'individu $M_i$. Il peut s'agir d'une nouvelle acquisition protégée b', ou de la forme protégée f d'une acquisition b déjà présente sur la carte d'identification de l'individu pour une identité parente.

La troisième partie de la clé secrète, $A_i^l$, est générée par le serveur de gestionnaire d'identité dérivée GMe à partir du reste de la clé et du secret de groupe msk. Le jeton de révocation $rt_i^l$ de l'individu Mi pour l'identité II est dérivé de cette clé secrète ; par exemple ce peut être l'élément $x_i^l$

Ainsi, ultérieurement, si l'individu Mi souhaite s'authentifier, pour le domaine $I_\ell$, auprès d'un fournisseur de service $SP_\ell$, il lui suffit de mettre en oeuvre le procédé d'authentification déjà décrit précédemment en référence à la figure 3b, au moyen de sa clé secrète $sk_i^l$.

Par conséquent, le serveur de gestion du domaine d'identité dérivée $GM_\ell$ génère pour l'individu, en fonction des informations transmises lors de l'authentification, au moins une partie de données d'identité avec lesquelles l'individu peut s'authentifier auprès d'un fournisseur de service pour le domaine d'identité dérivée.

Le serveur $GM_\ell$ mémorise en outre, dans une base de données privée, tout ou partie des informations échangées au cours du traitement d'authentification (information de dérivation) pour ultérieurement, le cas échéant, en fonction d'informations de lien transmises par un domaine parent (en l'occurrence, les jetons de révocation), faire le lien entre des données d'identité du domaine d'identité dérivée et des données d'identité du domaine parent.

Le traitement de génération par les différents serveurs d'identité détaillé ci-dessus est toutefois tel qu'aucun lien ne peut être établi à partir de deux authentifications dans deux domaines distincts en l'absence de ces informations de lien.

### Procédé de révocation

Si le gestionnaire d'identité $GM_\ell$ (gestionnaire parent) souhaite révoquer l'individu, il suffit qu'il publie dans la liste de révocation publique $RL_\ell$ le jeton de révocation $rt_i^l$ (information de révocation).

### Révocation descendante

Ainsi, les serveurs des gestionnaires d'identité $GM_m$ des identités $I_m$ juste au-dessous du niveau $\ell$ (gestionnaires d'identité dérivées du domaine $I_\ell$) entament un procédé 150 de révocation descendante (Downwards Revocation), ce que permettent les informations de liens entre des différents niveaux (jetons de révocation).

Le jeton de révocation $rt_i^l$ est publié dans $RL_\ell$. Ainsi chaque gestionnaire $GM_m$ d'une identité $I_m$ applique la fonction de dérivation $H_m$ à ce jeton fraîchement publié $rt_i^l$. Si le résultat obtenu est stocké dans la base de données $DB_m$, cela signifie que l'individu possède aussi une identité pour le domaine $I_m$ ; le gestionnaire $GM_m$ retrouve alors l'identité associée à cet individu pour le niveau m et publie le jeton de révocation $rt_i^m$ associé dans $RL_m$. Ce procédé est réitéré de façon récursive aux niveaux inférieurs.

En revanche, grâce aux propriétés des fonctions de dérivation $H_\ell$, les signatures pour différentes identités n'ont aucun lien entre elles. En particulier, pour deux signatures réalisées pour deux niveaux différents, il est impossible de savoir si elles ont été réalisées par le même individu ou non.

En particulier, en cas de révocation, une signature reste complètement anonyme pour les gestionnaires d'identités non-impactées par la révocation.

On notera en outre que la publication des informations de révocation que constituent les jetons de révocation rend impossible la génération de données d'identité dérivée.

### Révocation ascendante

Optionnellement, un procédé 160 de « révocation ascendante » (Upwards Revocation ») est aussi possible, si un gestionnaire d'identité d'un niveau $\ell$ pense qu'un gestionnaire d'identité d'un niveau parent devrait également révoquer l'individu $M_i$.

Dans ce cas le gestionnaire d'identité $GM_\ell$ envoie au gestionnaire d'identité $GM_k$ le jeton de dérivation $H_\ell(rt_i^k)$ obtenu lors de la phase 100. Le gestionnaire d'identité $GM_k$ peut alors appliquer la fonction $H_\ell$ à l'ensemble des jetons de révocation $rt_i^k$ des individus $M_i$ inscrits dans sa base de données privée $DB_k$ dans laquelle sont mémorisées pour déterminer lequel d'entre eux concorde avec le jeton de dérivation $H_\ell(rt_i^k)$

Le gestionnaire $GM_k$ a alors la possibilité de révoquer l'identité de l'individu s'il le souhaite.

Ce procédé de gestion d'identités présente les propriétés intéressantes de révocations descendante et ascendante tout en préservant l'anonymat des individus.

Il est en outre compatible avec l'utilisation de signatures de groupes VLR avec « Backward Unlinkability » telles que dans les articles susmentionnés. Dans ce dernier cas, le procédé de dérivation selon l'invention permet en outre de vérifier toutes les propriétés de sécurité requises : exactitude, traçabilité, exculpabilité (en anglais exculpability), anonymat (selfless-anonymity).qui sont également décrites dans ces publications.

Enfin, bien que l'exemple décrit ici utilise la construction de signature de groupe enseignée par Bringer et Patey dans l'article mentionné en introduction, il est néanmoins applicable à toute signature de groupe VLR (Verifier-Local Revocation) possédant la propriété dite de « Backward-Unlinkability » (selon la terminologie anglo-saxonne couramment utilisée par l'homme du métier).

## Revendications

**1.** Procédé de gestion et de contrôle de différentes données d'identité d'un individu, ces données correspondant à plusieurs domaines d'identités organisés en ensemble structuré,

dans lequel au moins un système de contrôle est apte à mettre en oeuvre pour un domaine d'identité donné une authentification de l'individu à partir des données d'identité associées à ce domaine pour l'individu,

**caractérisé en ce que**, pour générer des données d'identité d'un domaine d'identité dérivée pour lequel il est nécessaire de disposer de données d'identité pour un ou des domaines parents,

on met en oeuvre pour chaque domaine d'identité parent, à partir des données d'identité de l'individu pour le domaine parent, un traitement d'authentification de l'individu auprès d'un serveur de gestion du domaine d'identité dérivée au cours duquel,

- on transmet au serveur de gestion du domaine d'identité dérivée des informations fonction des données d'identité du domaine parent et au moins une information de preuve de validité de ces données,
- le serveur de gestion d'identité dérivée authentifie l'individu pour le domaine parent et contrôle, au moyen de l'information de preuve, la validité des informations transmises,

et **en ce que**, en fonction des résultats d'authentification et de contrôle,

- le serveur de gestion d'identité dérivée génère pour l'individu, en fonction des informations transmises, au moins une partie de données d'identité avec lesquelles l'individu peut s'authentifier auprès d'un fournisseur de service pour le domaine d'identité dérivée,
- ledit serveur de gestion d'identité dérivée mémorisant des informations de dérivation comportant tout ou partie des informations échangées au cours du traitement d'authentification pour ultérieurement, le cas échéant, en fonction d'informations de lien transmises par un domaine parent, faire le lien entre des données d'identité du domaine d'identité dérivée et des données d'identité du domaine parent, le traitement de génération par les différents serveurs d'identité étant tel qu'aucun lien ne peut être établi à partir de deux authentifications dans deux domaines distincts en l'absence de ces informations de lien,

**caractérisé en ce que** les données d'identité de l'individu pour un domaine comprennent une clé secrète et un jeton de révocation pour le domaine, et **en ce que**,

- lors de l'authentification de l'individu auprès du serveur de gestion du domaine d'identité dérivée, une information $(H_\ell(rt_i^k))$ obtenue à par-

tir du jeton de révocation de l'individu pour l'identité parente est communiquée au serveur de gestion du domaine d'identité dérivée, et

- la génération des données d'identité dérivées par le serveur de gestion d'identité dérivée comprend la génération d'une clé secrète $(x_i^\ell)$ d'identité dérivée et d'un jeton de révocation *(rtf)* de l'individu pour l'identité dérivée, la clé secrète et le jeton étant générés à partir du jeton de révocation de l'individu $(rt_i^k)$ pour l'identité parente.

2. Procédé de gestion et de contrôle selon la revendication 1, dans lequel, pour l'authentification d'un individu auprès d'un fournisseur de service pour un domaine d'identité, on transmet à ce fournisseur de service des informations déterminées en fonction des données d'identité du domaine, le traitement mis en oeuvre pour cette détermination rendant l'information ainsi transmise anonyme pour toute entité à l'exception du serveur de gestion du domaine et de l'individu qui s'authentifie.

3. Procédé de gestion et de contrôle selon l'une des revendications précédentes, dans lequel chaque serveur de gestion de domaine d'identité met en oeuvre un traitement de révocation d'individu, qui publie une information de révocation utilisée par les fournisseurs de service pour empêcher un individu révoqué d'un domaine de s'authentifier en utilisant les données d'identité associées à ce domaine.

4. Procédé de gestion d'identités selon la revendication précédente, dans lequel, lors d'un traitement de révocation par un serveur de domaine parent, ce serveur transmet à chaque serveur de gestion d'identité dérivée des informations de lien associées à un individu révoqué, ces informations étant traitées par ledit serveur, afin de mettre en oeuvre le traitement de révocation de l'individu, si ce dernier possède des données d'identité pour ce domaine d'identité dérivée

5. Procédé de gestion et de contrôle selon la revendication 3, lors d'un traitement de révocation par un serveur de domaine dérivé, ce serveur transmet à un serveur de gestion d'identité parent choisi des informations de dérivation associées à un individu révoqué, ces informations étant le cas échéant traitées par ledit serveur, afin de mettre en oeuvre le traitement de révocation de l'individu pour ce domaine parent.

6. Procédé selon l'une des revendications précédentes, dans lequel le traitement d'authentification auprès d'un fournisseur de service met en oeuvre un algorithme de type signature de groupe, les données d'identité d'un domaine comportant une clé de signature de groupe propre au domaine.

7. Procédé selon la revendication 4, dans lequel dans lequel chaque domaine d'identité est associé à une base de données publique contenant une liste publique de révocation, le traitement révocation mis en oeuvre par un serveur de gestion de domaine pour révoquer un individu rajoutant à ladite liste un jeton de révocation déterminé par ledit serveur à partir des données d'identité de l'individu, ce jeton de révocation servant d'information de révocation utilisée par les fournisseurs de service pour empêcher cet individu révoqué de s'authentifier en utilisant les données d'identité associées à ce domaine.

8. Procédé selon les revendications 4 et 7, dans lequel les jetons de révocation sont les informations de lien transmises à chaque serveur d'identité dérivée.

9. Procédé selon la revendication 1, dans lequel les informations de dérivation sont calculées à partir des informations de lien associées à l'individu, à l'aide d'une fonction dite à sens unique associée au domaine d'identité dérivée.

10. Procédé selon la revendication 1, dans lequel le serveur de gestion du domaine d'identité dérivée

- calcule, lors du traitement de génération de nouvelles données d'identité, les données d'identité à partir des informations de dérivation pour chacun des domaines d'identité parents et,
- mémorise dans une base de données privée à la fois les informations de dérivation et les nouvelles données d'identité de façon à pouvoir retrouver ces données à partir d'une information de dérivation.

11. Procédé selon la revendication 6, dans lequel la signature de groupe utilisée est du type VLR avec « Backward unlinkability » selon la terminologie anglo-saxonne couramment utilisée.

12. Procédé selon la revendication 11, dans lequel les différents domaines d'identité sont associés de façon unique aux différentes périodes temporelles du traitement de signature de groupe de telle façon que

- les fonctions à sens unique associées aux différents domaines d'identité sont les fonctions à sens unique associées aux périodes temporelles de la signature de groupe associée, et
- l'authentification mise en oeuvre lors du traitement de génération d'une nouvelle identité utilise la signature de groupe associée, avec la période temporelle associée au domaine d'identité dérivé, la signature de groupe servant également d'information de preuve de validité des données, les authentifications mises en oeuvre dans les autres cas d'utilisation n'exploitant pas la propriété de « Backward-Unlinkability ».

13. Système de gestion et de contrôle de différentes données d'identité d'un individu, ces données correspondant à plusieurs domaines d'identités organisés en ensemble structuré, les données d'identité de l'individu pour un domaine comprenant une clé secrète et un jeton de révocation pour le domaine, ledit système comportant au moins un serveur de gestion de domaine d'identité dérivée et au moins serveur de gestion de domaine d'identité parent, un individu possédant, pour chaque domaine d'identité, un dispositif personnel d'identification comportant une mémoire dans laquelle est stockée des données associées à ce domaine pour l'individu, cette mémoire étant apte à être lue par un dispositif de contrôle, **caractérisé en ce qu'**il comporte en outre des moyens de transmission au serveur de gestion du domaine d'identité dérivée d'informations fonction des données d'identité du domaine parent et au moins une information de preuve de validité de ces données, comprenant une information

$(H_\ell(rt_i^k))$ obtenue à partir du jeton de révocation de l'individu pour l'identité parente,

le serveur de gestion du domaine d'identité dérivée comportant des moyens de traitement aptes à :

    • authentifier l'individu pour le domaine parent,
    • contrôler, au moyen de l'information de preuve, la validité des informations transmises, et
    • en fonction des résultats d'authentification et de contrôle, générer pour l'individu, en fonction des informations transmises, au moins une partie de données d'identité avec lesquelles l'individu peut s'authentifier auprès d'un fournisseur de service pour le domaine d'identité dérivée, lesdites données comprenant une clé secrète

$(x_i^\ell)$ d'identité dérivée et un jeton de révocation

$(rt_i^\ell)$ de l'individu pour l'identité dérivée, générés à partir du jeton de révocation de l'individu

$(rt_i^k)$ pour l'identité parente,

ledit serveur de gestion d'identité dérivée comportant une base de données mémorisant des informations de dérivation comportant tout ou partie des informations échangées au cours du traitement d'authentification pour ultérieurement, le cas échéant, en fonction d'informations de lien transmises par un domaine parent, faire le lien entre des données d'identité du domaine d'identité dérivée et des données d'identité du domaine parent, le traitement de génération par les différents serveurs d'identité étant tel qu'aucun lien ne peut être établi à partir de deux authentifications dans deux domaines distincts en l'absence de ces informations de lien.

## Patentansprüche

1. Verfahren zur Verwaltung und Prüfung von verschiedenen Identitätsdaten eines Individuums, wobei diese Daten mehreren Identitätsdomains entsprechen, die in einem strukturierten Satz organisiert sind, wobei mindestens ein Prüfsystem imstande ist, für eine bestimmte Identitätsdomain eine Authentifizierung des Individuums auf der Basis der Identitätsdaten durchzuführen, die dieser Domain für das Individuum zugeordnet sind,
**dadurch gekennzeichnet, dass**, um Identitätsdaten einer Domain einer abgeleiteten Identität zu erzeugen, für die es notwendig ist, über Identitätsdaten für eine oder Parent-Domains zu verfügen,
für jede Parent-Identitätsdomain auf der Basis der Identitätsdaten des Individuums für die Parent-Domain, eine Authentifizierungsverarbeitung des Individuums bei einem Verwaltungsserver der Domain einer abgeleiteten Identität durchgeführt wird, bei der

    - dem Verwaltungsserver der Domain einer abgeleiteten Identität Informationen übermittelt werden, die von den Identitätsdaten der Parent-Domain abhängig sind, und mindestens eine Information, die den Beweis für die Validität dieser Daten erbringt,
    - der Verwaltungsserver einer abgeleiteten Identität das Individuum für die Parent-Domain authentifiziert und mittels der Beweisinformation die Validität der übermittelten Informationen überprüft,

und dass in Abhängigkeit der Authentifizierungs- und Prüfergebnisse,

    - der Verwaltungsserver einer abgeleiteten Identität für das Individuum in Abhängigkeit von den übermittelten Informationen mindestens einen Teil der Identitätsdaten erzeugt, mit denen sich das Individuum bei einem Diensteanbieter für die Domain einer abgeleiteten Identität authentifizieren kann,
    - wobei der Verwaltungsserver einer abgeleiteten Identität Ableitungsinformationen speichert, die alle oder einen Teil der während der Authentifizierungsverarbeitung ausgetauschten Informationen aufweisen, um später gegebenenfalls in Abhängigkeit von den von einer Parent-Domain übermittelten Verbindungsinformationen die Verbindung zwischen Identitätsdaten der Domain einer abgeleiteten Identität und Identitätsdaten der Parent-Domain herzustellen, wobei die Erzeugungsverarbeitung durch die verschiedenen Identitätsserver derart erfolgt, dass keine Verbindung auf der Basis von zwei Authentifizierungen in zwei unterschiedlichen Domains bei Abwesenheit dieser Verbindungsinformationen herstellbar ist,

**dadurch gekennzeichnet, dass** die Identitätsdaten des Individuums für eine Domain einen geheimen Schlüssel und einen Sperrvermerk für die Domain umfassen, und dass

- bei der Authentifizierung des Individuums bei dem Verwaltungsserver der Domain einer abgeleiteten Identität eine Information $(H_\ell(rt_i^k))$, erhalten auf der Basis des Sperrvermerks des Individuums für die Parent-Identität, dem Verwaltungsserver der Domain einer abgeleiteten Identität übermittelt wird, und
- die Erzeugung der abgeleiteten Identitätsdaten durch den Verwaltungsserver einer abgeleiteten Identität die Erzeugung eines geheimen Schlüssels $(x_i^\ell)$ einer abgeleiteten Identität und eines Sperrvermerks $(rt_i^\ell)$ des Individuums für die abgeleitete Identität umfasst, wobei der geheime Schlüssel und der Vermerk auf der Basis des Sperrvermerks des Individuums $(rt_i^k)$ für die Parent-Identität erzeugt werden.

2. Verwaltungs- und Prüfverfahren nach Anspruch 1, wobei für die Authentifizierung eines Individuums bei einem Diensteanbieter für eine Identitätsdomain diesem Diensteanbieter Informationen übermittelt werden, die in Abhängigkeit von den Identitätsdaten der Domain bestimmt werden, wobei die für diese Bestimmung durchgeführte Verarbeitung die derart übermittelte Information für jede Einheit anonymisiert, mit Ausnahme des Verwaltungsservers der Domain und des Individuums, das sich authentifiziert.

3. Verwaltungs- und Prüfverfahren nach einem der vorangehenden Ansprüche, wobei jeder Verwaltungsserver der Identitätsdomain eine Sperrverarbeitung des Individuums durchführt, der eine Sperrinformation veröffentlicht, die von den Dienstbereitstellern verwendet wird, um zu verhindern, dass sich ein von einer Domain gesperrtes Individuum mit den dieser Domain zugeordneten Identitätsdaten authentifiziert.

4. Identitätsverwaltungsverfahren nach vorangehendem Anspruch, wobei bei einer Sperrverarbeitung durch einen Parent-Domain-Server dieser Server jedem Verwaltungsserver einer abgeleiteten Identität Verbindungsinformationen übermittelt, die einem gesperrten Individuum zugeordnet sind, wobei diese Informationen von dem Server verarbeitet werden, um die Sperrverarbeitung des Individuums durchzuführen, wenn Letztgenannter Identitätsdaten für diese Domain einer abgeleiteten Identität besitzt.

5. Verwaltungs- und Prüfverfahren nach Anspruch 3, bei einer Sperrverarbeitung durch einen Server einer abgeleiteten Domain dieser Server einem ausgewählten Verwaltungsserver einer Parent-Identität Ableitungsinformationen übermittelt, die einem gesperrten Individuum zugeordnet sind, wobei diese Informationen gegebenenfalls von dem Server verarbeitet werden, um die Sperrverarbeitung des Individuums für diese Parent-Domain durchzuführen.

6. Verfahren nach einem der vorangehenden Ansprüche, wobei die Authentifizierungsverarbeitung bei einem Diensteanbieter einen Algorithmus vom Typ Gruppensignatur anwendet, wobei die Identitätsdaten einer Domain einen domaineigenen Gruppensignaturschlüssel aufweisen.

7. Verfahren nach Anspruch 4, wobei jede Identitätsdomain einer öffentlichen Datenbank zugeordnet ist, die eine öffentliche Sperrliste enthält, wobei die von einem Domain-Verwaltungsserver zum Sperren eines Individuums durchgeführte Sperrverarbeitung der Liste einen von dem Server auf der Basis der Identitätsdaten des Individuums bestimmten Sperrvermerk hinzufügt, wobei dieser Sperrvermerk als Sperrinformation dient, die von den Diensteanbietern verwendet wird, um zu verhindern, dass sich dieses gesperrte Individuum mit den dieser Domain zugeordneten Identitätsdaten authentifiziert.

8. Verfahren nach den Ansprüchen 4 und 7, wobei die Sperrvermerke Verbindungsinformationen sind, die jedem Server einer abgeleiteten Identität übermittelt werden.

9. Verfahren nach Anspruch 1, wobei die Ableitungsinformationen auf der Basis der dem Individuum zugeordneten Verbindungsinformationen mit Hilfe einer sogenannten Einwegfunktion, die der Domain einer abgeleiteten Identität zugeordnet ist, berechnet werden.

10. Verfahren nach Anspruch 1, wobei der Verwaltungsserver der Domain einer abgeleiteten Identität

- bei der Erzeugungsverarbeitung neuer Identitätsdaten die Identitätsdaten auf der Basis der Ableitungsinformationen für jede der Identitäts-Parent-Domains berechnet und,

- in einer privaten Datenbank sowohl die Ableitungsinformationen und die neuen Identitätsdaten derart speichert, dass diese Daten auf der Basis einer Ableitungsinformation auffindbar sind.

11. Verfahren nach Anspruch 6, wobei die verwendete Gruppensignatur vom Typ VLR mit "Backward unlinkability" gemäß der üblicherweise verwendeten angelsächsischen Terminologie lautet.

12. Verfahren nach Anspruch 11, wobei die verschiedenen Identitätsdomains einmalig den verschiedenen zeitlichen Perioden der Verarbeitung der Gruppensignatur derart zugeordnet sind, dass

- die den verschiedenen Identitätsdomains zugeordneten Einwegfunktionen Einwegfunktionen sind, die den zeitlichen Perioden der zugeordneten Gruppensignatur zugeordnet sind, und
- die bei einer Erzeugungsverarbeitung einer neuen Identität durchgeführte Authentifizierung die zugeordnete Gruppensignatur mit der einer abgeleiteten Identitätsdomain zugeordneten zeitlichen Periode verwendet, wobei die Gruppensignatur ebenfalls als Beweisinformation für die Validität der Daten dient, wobei die in den anderen Anwendungsfällen durchgeführten Authentifizierungen nicht die Eigenschaft von "Backward-Unlinkability" nutzen.

13. System zur Verwaltung und Prüfung verschiedener Identitätsdaten eines Individuums, wobei diese Daten mehreren Identitätsdomains entsprechen, die in einem strukturierten Satz organisiert sind, wobei die Identitätsdaten des Individuums einen geheimen Schlüssel und einen Sperrvermerk für die Domain umfassen,

wobei das System mindestens einen Verwaltungsserver der Domain einer abgeleiteten Identität und mindestens Verwaltungsserver der Domain der Parent-Identität aufweist,

wobei ein Individuum für jede Identitätsdomain eine persönliche Identifikationsvorrichtung besitzt, die einen Speicher aufweist, in dem Daten gespeichert sind, die dieser Domain für das Individuum zugeordnet sind,

wobei dieser Speicher imstande ist, von einer Prüfvorrichtung gelesen zu werden,

**dadurch gekennzeichnet, dass** es ferner Übertragungsmittel an den Verwaltungsserver der Domain einer abgeleiteten Identität von Informationen aufweist, die von den Identitätsdaten der Parent-Domain abhängig sind, und mindestens einer Beweisinformation für die Validität dieser Daten, umfassend

eine Information $(H_\ell(rt_i^k))$, erhalten auf der Basis des Sperrvermerks des Individuums für die Parent-Identität,

wobei der Verwaltungsserver der Domain einer abgeleiteten Identität Verarbeitungsmittel aufweist, die imstande sind:

• das Individuum für die Parent-Domain zu authentifizieren,
• mittels der Beweisinformation die Validität der übermittelten Informationen zu prüfen, und
• in Abhängigkeit von den Authentifizierungs- und Prüfergebnissen für das Individuum in Abhängigkeit von den übermittelten Informationen mindestens einen Teil der Identitätsdaten zu erzeugen, mit denen sich das Individuum bei einem Diensteanbieter für die Domain einer abgeleiteten Identität authentifizieren kann, wobei die Daten einen geheimen Schlüssel $(x_i^\ell)$ einer abgeleiteten Identität und einen Sperrvermerk $(rt_i^\ell)$ des Individuums für die abgeleitete Identität umfassen, erzeugt auf der Basis des Sperr Sperrvermerks des Individuums $(rt_i^k)$ für die Parent-Identität,

wobei der Verwaltungsserver einer abgeleiteten Identität eine Datenbank aufweist, die Ableitungsinformationen speichert, die alle oder einen Teil der während der Authentifizierungsverarbeitung ausgetauschten Informationen aufweisen, um später gegebenenfalls in Abhängigkeit von den von einer Parent-Domain übermittelten Verbindungsinformationen die Verbindung zwischen Identitätsdaten der Domain einer abgeleiteten Identität und Identitätsdaten der Parent-Domain herzustellen, wobei die Erzeugungsverarbeitung durch die verschiedenen Identitätsserver derart erfolgt, dass keine Verbindung auf der Basis von zwei Authentifizierungen in zwei unterschiedlichen Domains bei Abwesenheit dieser Verbindungsinformationen herstellbar ist.

**Claims**

1. A method of management and control of different identity data of an individual, these data corresponding to several identity domains organised into a structured set,

wherein at least one controlling system can be used for a given identity domain to implement an authentication of the individual from the identity data associated with this domain for the individual,

**characterised in that**, for generating identity data for a derived identity domain for which identity data are necessary for one or more parent domains, an authentication processing of the individual is implemented for each parent identity domain starting from identity data of the individual for the parent domain, on a derived identity domain management server, during which:

 - information dependent on the parent domain identity data and at least one item of information to prove validity of these data are transmitted to the derived identity domain management server,
 - the derived identity management server authenticates the individual for the parent domain and uses the proof information to control that the information transmitted is valid,

and **in that**, depending on the authentication and control results:

 - the derived identity management server generates at least some of the identity data with which the individual can authenticate himself with a service provider for the derived identity domain, as a function of the information transmitted, for the individual,
 - said derived identity management server stores derivation information containing all or some of the information exchanged during the authentication processing so that the link between identity data of the derived identity domain and identity data of the parent domain can be made later if required, depending on link information transmitted by a parent domain, the generation processing done by the different identity servers being such that no link can be created from two authentications in two distinct domains if this link information is not available,

**characterised in that** the identity data of the individual for a domain comprise a secret key and a revocation token for the domain,
and **in that**,

 - when authenticating the individual with the derived identity domain management server, an item of information $\left(H_\ell\left(rt_i^k\right)\right)$ obtained from the revocation token of the individual for the parent identity is communicated to the derived identity domain management server, and

 - generation of the derived identity data by the derived identity management server comprises generation of a derived identity secret key (xf) and a revocation token $\left(rt_i^\ell\right)$ of the individual for the derived identity, the secret key and the token being generated from the revocation token of the individual $\left(rt_i^k\right)$ for the parent identity.

2. The method of management and control according to claim 1, wherein, in order to authenticate an individual with a service provider for an identity domain, information determined as a function of the domain identity data is transmitted to this service provider, the processing implemented for this determination making the information thus transmitted anonymous for any entity except for the domain management server and the individual who is authenticating himself.

3. The method of management and control according to one of the preceding claims, wherein an individual revocation processing is implemented by each identity domain management server, which publishes an item of revocation information used by service providers to prevent an individual revoked from one domain from authenticating himself using the identity data associated with this domain.

4. The identity management method according to the preceding claim, wherein during revocation processing by a parent domain server, this server transmits link information associated with a revoked individual to each derived identity management server, this information being processed by said server to implement the revocation processing for the individual, if the individual has identity data for this derived identity domain.

5. The method of management and control according to claim 3, wherein during revocation processing by a derived domain server, this server transmits derivation information associated with a revoked individual to a chosen parent identity management server, this information possibly being processed by said server so as to implement the revocation processing of the individual for this parent domain.

6. The method according to one of the preceding claims, wherein an algorithm of the group signature type is used in the authentication processing with a service provider, the domain identity data comprising a group signature key specific to the domain.

7. The method according to claim 4, wherein each identity domain is associated with a public database containing a public revocation list, the revocation processing used by a domain management server to revoke an individual adding a revocation token determined by said server from the identity data for the individual to said list, this revocation token being used as a revocation information by service providers to prevent this revoked individual from authenticating himself using the identity data associated with this domain.

8. The method according to claims 4 and 7, wherein revocation tokens are link information sent to each derived identity server.

9. The method according to claim 1, wherein derivation information is calculated from link information associated with the individual, using a so-called single directional function associated with the derived identity domain.

10. The method according to claim 1, wherein the derived identity domain management server:

    - calculates identity data from derivation information for each parent identity domain, during the generation processing of new identity data, and
    - stores both derivation information and new identity data in a private database, so as to search for these data from derivation information.

11. The method according to claim 6, wherein the group signature used is a VLR with Backward unlinkability.

12. The method according to claim 11, wherein the various identity domains are uniquely associated with the various time periods of the group signature processing, such that

    - single directional functions associated with the various identity domains are single directional functions associated with the time periods of the associated group signature, and
    - the authentication used during processing for generating a new identity uses the associated group signature, together with the time period associated with the derived identity domain, the group signature being used also as information to prove validity of data, and the authentications used in other use cases do not use the Backward unlinkability property.

13. A system for management and control of various identity data of an individual, these data corresponding to several identity domains organised in a structured set, the identity data of the individual for a domain comprising a secret key and a revocation token for the domain,
    said system comprising at least one derived identity domain management server and at least one parent identity domain management server,
    an individual holding a personal identification device comprising a memory in which data associated with this domain for the individual are stored, for each identity domain,
    this memory being readable by a control device, **characterised in that** it further comprises means for transmitting information dependent on the parent domain identity data and at least one item of information to prove validity of these data, to the derived identity domain management server, comprising an item of information $\left(H_\ell\left(rt_i^k\right)\right)$ obtained from the revocation token of the individual for the parent identity,
    the derived identity domain management server comprising processing means capable of:

    • authenticating the individual for the parent domain,
    • controlling that the information transmitted is valid using the proof information, and
    • depending on the authentication and control results, generating at least some of the identity data with which the individual can authenticate himself with a service provider for the derived identity domain, as a function of the information transmitted, for the individual, said data comprising a derived identity secret key $\left(x_i^\ell\right)$ and

    a revocation token $\left(rt_i^\ell\right)$ of the individual for the derived identity, generated from the revocation token of the individual $\left(rt_i^k\right)$ for the parent identity,

said derived identity management server comprising a database for storing derivation information containing all or some of the information exchanged during the authentication processing so that the link between identity data of the derived identity domain and identity data of the parent domain can be made later if required, depending on link information transmitted by a parent domain, the generation processing done by the different identity servers being such that no link can be created from two authentications in two distinct domains if this link information is not available.

E

$I_j$ — Identité nationale

$I_k$ — Sécurité sociale

Permis de conduire

Entreprise 1

Entreprise 2

Assurance voiture

Permis poids lourds

$I_\ell$

**Figure 1**

Mi

Domaine d'identité I

Gestionnaire GM$_I$

DB$_I$

RL$_I$

**Figure 2**

Mi

11 · · · · · · · · · · · · · · ·> Enrôlement

Domaine
d'identité $I_0$

Gestionnaire $GM_0$

$rt_i^0$

DB$_0$

b

$x_i^0 , A_i^0$

12

b,(f), $x_i^0 , A_i^0$

Figure 3a

12

b,(f), $x_i^0 , A_i^0$

21

Mi

b

b'

Check (b=b')
H0(b)=$r_i^0$

Sign

σ

m

Fournisseur
de service SP

Verify (σ)

RL$_0$

Figure 3b

**Figure 4**

**Figure 5**

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1164745 A
- FR 2925732

- WO 2009028794 A
- US 20100122080 A

**Littérature non-brevet citée dans la description**

- Group signatures with verifier-local revocation. **D. BONEH ; H. SHACHAM.** ACM Conference on Computer and Communications Security. ACM, 2004, 168-177
- VLR group signatures with indisputable exculpability and efficient revocation. **L. CHEN ; J. LI.** SocialCom/PASSAT. IEEE Computer Society, 2010, 727-734

- **J. BRINGER ; A. PATEY.** Backward unlinkability for a VLR group signature scheme with efficient revocation check. *Cryptology ePrint Archive - Report 2011/376*